# EUROPÄISCHE PATENTSCHRIFT

(11) **EP 0 872 380 B1**
(45) Veröffentlichungstag und Bekanntmachung des Hinweises auf die Patenterteilung: **02.06.2004**
(21) Anmeldenummer: 98104370.6
(22) Anmeldetag: 11.03.1998
(51) Int. Cl.: B60R 9/04, B60R 9/058

(54) **Befestigungsvorrichtung für Dachlastträger an Kraftfahrzeugen, insbesondere Personenkraftwagen**
Device for fastening roof carriers on vehicles, in particular motor vehicles
Dispositif de fixation des porte-bagages pour les toits des véhicules, en particulier des véhicules automobiles

(30) Priorität: 17.04.1997 DE 19716048
(43) Veröffentlichungstag der Anmeldung: 21.10.1998
(73) Patentinhaber: Dr.Ing.h.c. F. Porsche Aktiengesellschaft, 70435 Stuttgart (DE)
(72) Erfinder: Tress, Andreas, 74321 Bietigheim-Bissingen (DE); Roth, Jan, 70563 Stuttgart (DE)

(56) Entgegenhaltungen:
- DE-A- 2 950 643
- DE-A- 3 637 856
- DE-A- 4 402 217
- DE-A- 19 629 060
- FR-A- 2 672 260
- FR-A- 2 738 198
- US-A- 5 306 156

## Beschreibung

Die Erfindung bezieht sich auf eine Befestigungsvorrichtung für Dachlastträger an Kraftfahrzeugen gemäß dem Oberbegriff des Patentanspruchs 1.

Bei einer bekannten Befestigungsvorrichtung für einen Dachlastträger, DE 36 37 856 A1, ist am Boden eines sich in Fahrzeuglängsrichtung erstreckenden Dachkanals örtlich eine langgestreckte Grundplatte angeordnet, die über Schrauben an Dachblechteilen in Lage gehalten ist. Ferner umfaßt die Grundplatte eine nach oben hin vorstehende Gewindehülse, an deren Oberseite bei geöffneter Klappe ein nicht näher dargestelltes Abstützteil eines Dachlastträgers festlegbar ist. Die Oberseite der Gewindehülse ist etwa horizontal ausgerichtet.

Bei dieser Anordnung treten im Verbindungsbereich Gewindehülse/Abstützteil aufgrund des kleinen Querschnitts der Gewindehülse relativ hohe Flächenpressungen auf, so daß diese Konstruktion nur zur Aufnahme und Einleitung relativ kleiner Kräfte und somit nur für geringe Dachlasten geeignet ist.

Aufgabe der Erfindung ist es, an einem Abstützteil eines Dachlastträgers und an der aufbauseitig festgelegten Grundplatte solche Vorkehrungen zu treffen, daß große Dachlasten aufnehmbar und gut in den feststehenden Aufbau einleitbar sind.

Erfindungsgemäß wird diese Aufgabe durch die Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, daß durch die Ausbildung der Hauptauflagefläche als schiefe Ebene zur Schraubrichtung die über die Schraube eingeleiteten Kräfte in eine waagerechte und eine senkrechte Komponente zur Schraubrichtung aufgeteilt werden. Ferner wird durch die schiefe Ebene die Auflagefläche zwischen Abstützteil und Grundplatte vergrößert, wodurch sich eine geringere Flächenpressung ergibt. Außerdem erreicht man durch die schiefe Ebene unabhängig von den Fertigungstoleranzen und eventueller Abnutzung immer einen hundertprozentigen Formschluß. Durch die seitlich neben den Auflageflächen vorgesehenen formschlüssigen Verbindungen zwischen Grundplatte und Abstützteil werden die auftretenden Kräfte in Y- und X-Richtung gut in den feststehenden Aufbau eingeleitet und die Schraubverbindung wird entlastet.

Ein Ausführungsbeispiel der Erfindung ist in der Zeichnung dargestellt und wird im folgenden näher erläutert.

Es zeigen
- Fig. 1: eine Teildraufsicht auf einen seitlich außenliegenden Dachkanal eines Personenkraftwagens mit eingesetzter Grundplatte, jedoch ohne Abdeckleiste dargestellt,

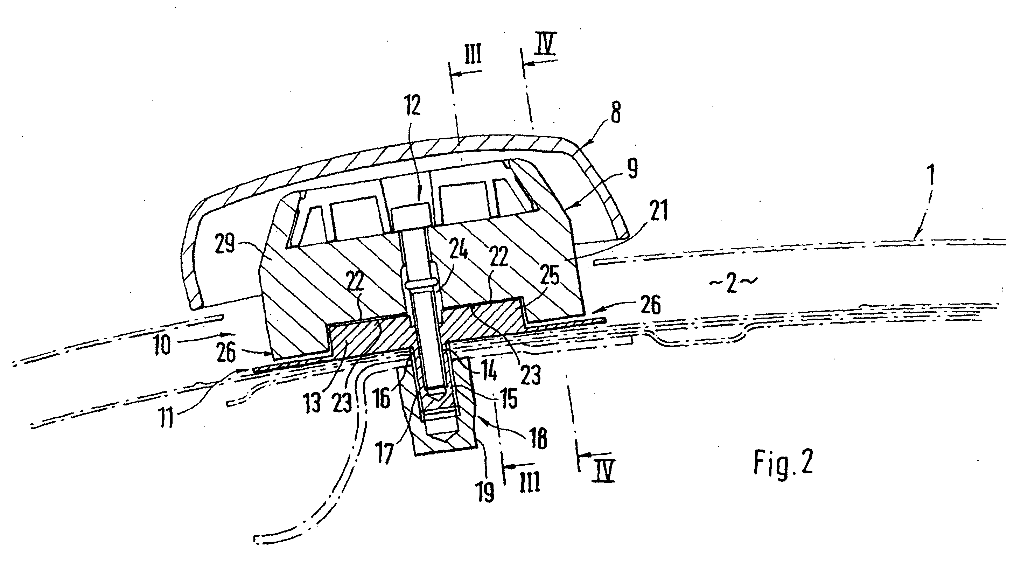

- Fig. 2: einen Schnitt nach der Linie II-II der Fig. 1 mit eingesetztem Abstützteil eines Dachlastträgers,
- Fig. 3: einen Schnitt nach der Linie III-III der Fig. 2 und
- Fig. 4: einen Schnitt nach der Linie IV-IV der Fig. 2.

Ein nicht näher dargestelltes Kraftfahrzeug weist in seitlich außenliegenden Bereichen eines Fahrzeugdaches 1 jeweils einen sich in Fahrzeuglängsrichtung erstreckenden, vertieften Dachkanal 2 auf, der nach oben hin durch eine Abdeckleiste 3 verschlossen ist.

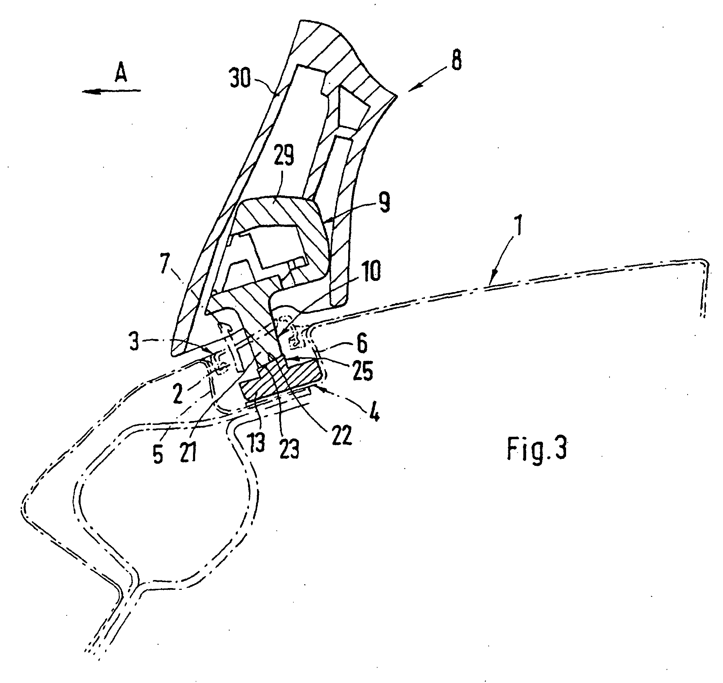

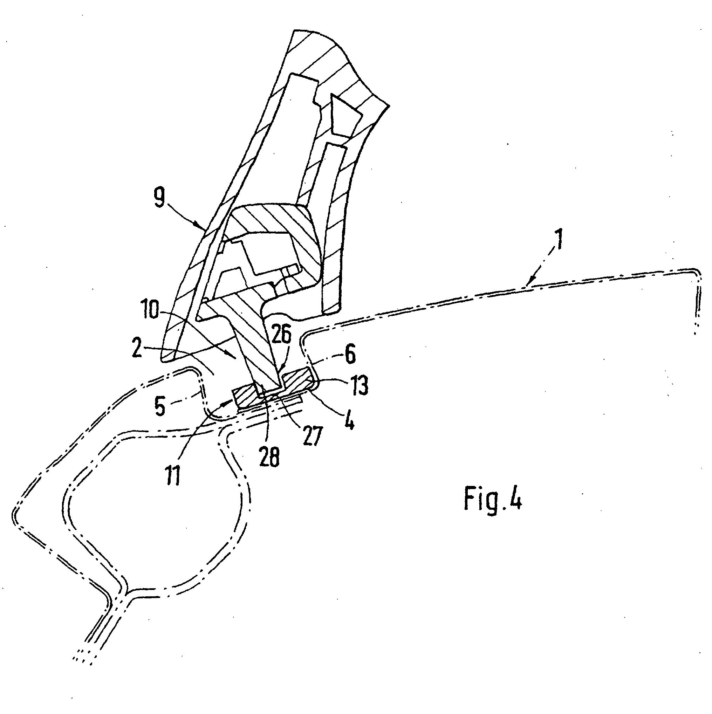

In den Figuren 3 und 4 ist jeweils die in Fahrtrichtung gesehen linke Hälfte des Fahrzeugdaches 1 und der zugeordnete Dachkanal 2 dargestellt. Jeder sich über die gesamte Länge des Fahrzeugdaches 1 erstreckende Dachkanal 2 ist im Querschnitt etwa U-förmig profiliert und setzt sich aus einem Boden 4 und zwei beabstandet angeordneten aufrechten Seitenwänden 5, 6 zusammen. Zur Befestigung eines Dachtransportsystems sind an jeder Abdeckleiste 3 in einem vorderen Bereich und einem hinteren Bereich jeweils verlagerbare Klappen 7 vorgesehen, die entweder durch Verschwenken oder Verschieben in eine Freigabestellung bewegbar sind. Gemäß Fig. 3 sind die Klappen 7 von einer Schließstellung in eine aufrechte Freigabestellung hochschwenkbar.

Das Dachtransportsystem umfaßt einen vorderen, querverlaufenden Dachlastträger und einen hinteren, querverlaufenden Dachlastträger, wobei in den Fig. 3 und 4 nur die endseitigen Abstützteile 9 der Dachlastträger 8 dargestellt sind, nicht jedoch der sie verbindende Querträger. Jeder Dachlastträger 8 ist an seinen beiden seitlich außenliegenden Enden über eine Befestigungsvorrichtung 10 am feststehenden Fahrzeugdach 1 in Lage gehalten. Jede Befestigungsvorrichtung 10 umfaßt ein örtlich im Dachkanal 2 angeordnetes Befestigungsorgan 11, an dem das endseitige Abstützteil 9 des Dachlastträgers 8 mittels zumindest einer aufrechten Befestigungsschraube 12 festlegbar ist

Jedes Befestigungsorgan 11 wird durch eine am Boden 4 des Dachkanals 2 aufliegende und daran befestigte Grundplatte 13 gebildet. An der Grundplatte 13 ist zumindest ein Gewindeabschnitt 14 zur Aufnahme der von oben her eingedrehten Befestigungsschraube 12 für das Abstützteil 9 ausgebildet.

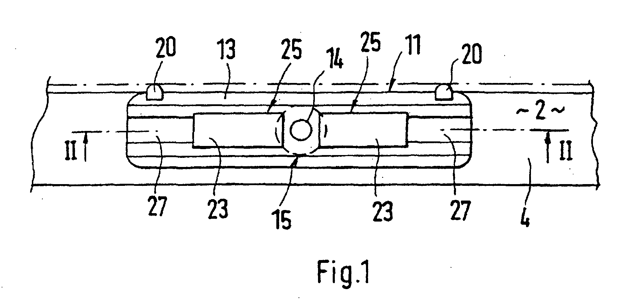

Im Ausführungsbeispiel wird der Gewindeabschnitt 14 durch ein Innengewinde gebildet, das an einem aufrechten, nach unten ragenden Haltebolzen 15 der langgestreckten Grundplatte 13 vorgesehen ist. Der Haltebolzen 15 ist etwa in einem mittleren Bereich der Längserstreckung der Grundplatte 13 vorgesehen. Der Haltebolzen 15 ist durch eine bodenseitige Bohrung 16 des Dachkanals 2 hindurchgeführt und überragt den Dachkanal 2 nach unten hin in Richtung Fahrgastraum, wobei auf ein Außengewinde 17 des Haltebolzens 15 von unten her eine Hutmutter 18 aufsetzbar ist. Die Hutmutter 18 weist an ihrem unteren Ende einen Außensechskant 19 zum Festziehen der Hutmutter 18 auf. Es können aber auch zwei oder mehrere Haltebolzen 15 zur Festlegung jeder Grundplatte 13 vorgesehen sein. Zur richtigen Positionierung der Grundplatte 13 im Dachkanal 2 sind an einer Längsseite der Grundplatte 13 zwei beabstandet angeordnete, seitlich vorstehende Zungen 20 ausgebildet, die sich an der benachbarten, aufrechten inneren Seitenwand 6 des Dachkanals 2 abstützen (Fig. 1).

Erfindungsgemäß ist an der Unterseite eines aufrechten, sich in Fahrzeuglängsrichtung erstreckenden, schmalen Steges 21 des Abstützteiles 9 zumindest eine - in Fahrzeugquerrichtung gesehen - als schiefe Ebene zur Schraubrichtung der Befestigungsschraube 12 ausgebildete Anlagefläche 22 angeordnet, die auf einer gleichgerichteten, nach oben hin vorstehenden Anlagefläche 23 der Grundplatte 13 aufliegt. Der in Fahrzeugquerrichtung gesehene, relativ schmale Steg 21 ragt abschnittsweise in den Dachkanal 2 hinein (Fig. 3).

Im Ausführungsbeispiel ist der aufrechte Steg 21 des Abstützteiles 9 im Bereich der mittigen Befestigungsschraube 12 ausgespart und es erstrecken sich beiderseits der Aussparung 24 die langgestreckten Anlageflächen 22. Die gegenüberliegenden Anlageflächen 23 an der Grundplatte 13 sind an erhabenen Bereichen 25 vorgesehen, die sich - in Längsrichtung gesehen - beiderseits des mittigen Gewindeabschnitts 14 zum Eindrehen der Befestigungsschraube 12 erstrecken.

Die Anlageflächen 22, 23 am Abstützteil 9 und an der Grundplatte 13 steigen jeweils zur Fahrzeugmittellängsebene hin an, wogegen sie zur Fahrzeugaußenseite A hin abfallen (Fig. 3). Die Anlageflächen 23 an der Grundplatte 13 sind - in Fahrzeugquerrichtung gesehen - geringfügig breiter als die Anlageflächen 24 am Abstützteil 9, so daß je nach Toleranzlage eine Verschiebung des Abstützteils 9 in Fahrzeugquerrichtung relativ zur feststehenden Grundplatte 13 möglich ist.

Die Anlageflächen 22 am Abstützteil 9 sind etwas länger als die Anlageflächen 23 an der darunterliegenden Grundplatte 13, so daß das Abstützteil 9 in Fahrzeuglängsrichtung um einen definierten Betrag gegenüber der Grundplatte 13 verschiebbar ist.

In Fahrzeuglängsrichtung gesehen ist seitlich neben den Anlageflächen 22, 23 zwischen der Grundplatte 13 und dem Abstützteil 9 wenigstens eine formschlüssige Verbindung 26 vorgesehen. Hierzu ist an der Grundplatte 13 eine vertiefte Nut 27 ausgebildet, in die eine nach unten hin vorstehende Führungsnase 28 des Abstützteiles 9 formschlüssig eingreift. Durch die formschlüssige Verbindung 26 werden die auftretenden Kräfte gut in Y- und X-Richtung eingeleitet und die Schraubverbindung wird entlastet (Fig. 4).

Im Ausführungsbeispiel ist im vorderen und hinteren Endbereich von Grundplatte 13 und Abstützteil 9 jeweils eine formschlüssige Verbindung 26 vorgesehen. Der Steg 21 bzw. die einstückig mit dem Steg 21 ausgebildeten Führungsnasen 28 sind - im Querschnitt gesehen - leicht keilförmig ausgebildet und verjüngen sich nach unten hin. Die vertiefte Nut 27 an der Grundplatte 13 ist - in Fahrzeugquerrichtung gesehen - etwas breiter ausgebildet als die in die Nut 27 hineinragende Führungsnase 28. Der untere Rand der Führungsnase 28 liegt nicht am Boden der Nut 27 an, sondern verläuft mit geringem Abstand zum Boden (Fig. 4).

Im Ausführungsbeipsiel wird das Abstützteil 9 durch einen Adapter 29 gebildet, der mit einem Trägerfuß 30 des Dachlastträgers 8 über Schrauben verbindbar ist. Das Abstützteil 9 könnte jedoch auch direkt durch einen Trägerfuß 30 des Dachlastträgers 8 gebildet werden.

## Patentansprüche

1. Befestigungsvorrichtung (10) für Dachlastträger (8) an Kraftfahrzeugen, insbesondere Personenkraftwagen, wobei am Fahrzeugdach (1) in seitlich außenliegenden, sich in Fahrzeuglängsrichtung erstreckenden Dachkanälen (2) örtlich Befestigungsorgane (11) angeordnet sind, an denen endseitige Abstützteile (9) der Dachlastträger (8) festlegbar sind und jedes Befestigungsorgan (11) durch eine am Boden des Dachkanals aufliegende und daran befestigte Grundplatte (13) gebildet wird, an der zumindest ein Gewindeabschnitt zum Eindrehen einer Befestigungsschraube (12) für das Abstützteil ausgebildet ist, **dadurch gekennzeichnet, daß** an der Unterseite eines aufrechten Steges (21) des Abstützteiles (9) zumindest eine in Fahrzeugquerrichtung gesehen als schiefe Ebene zur Schraubrichtung ausgebildete Anlagefläche (22) angeordnet ist, die auf einer gleichgerichteten, nach oben hin vorstehenden Anlagefläche (23) der Grundplatte (13) aufliegt und daß seitlich neben den Anlageflächen (23) an der Grundplatte (13) wenigstens eine vertiefte Nut (27) ausgebildet ist, in die eine nach unten hin vorstehende Führungsnase (28) des Abstützteiles (9) formschlüssig eingreift.

2. Befestigungsvorrichtung nach Anspruch 1, **dadurch gekennzeichnet, daß** die Anlageflächen (22, 23) am Abstützteil (9) und an der Grundplatte (13) zur Fahrzeugmitte hin ansteigen.

3. Befestigungsvorrichtung nach Anspruch 1, **dadurch gekennzeichnet, daß** am Abstützteil (9) und an der Grundplatte (13) beiderseits der - in Längsrichtung gesehen - etwa mittigen Befestigungsschraube (12) Anlageflächen (22, 23) vorgesehen sind.

4. Befestigungsvorrichtung nach Anspruch 1, **dadurch gekennzeichnet, daß** die Anlageflächen (23) der Grundplatte (13) - in Fahrzeugquerrichtung gesehen - geringfügig breiter sind als die Anlageflächen (22) am Abstützteil (9).

5. Befestigungsvorrichtung nach Anspruch 1, **dadurch gekennzeichnet, daß** die Anlagenflächen (22) am Abstützteil (9) etwas länger sind als die Anlagenflächen (23) an der Grundplatte (13), so daß das Abstützteil (9) in Fahrzeuglängsrichtung gegenüber der Grundplatte (13) verschiebbar ist.

6. Befestigungsvorrichtung nach Anspruch 1, **dadurch gekennzeichnet, daß** die Nut (27) an der Grundplatte (13) - in Fahrzeugquerrichtung gesehen - etwas breiter ausgebildet ist als die in die Nut (27) hineinragende Führungsnase (28).

7. Befestigungsvorrichtung nach Anspruch 1, **dadurch gekennzeichnet, daß** der untere Rand der Führungsnase (28) mit geringem Abstand zum darunterliegenden Boden der Nut (27) verläuft.

8. Befestigungsvorrichtung nach Anspruch 1, **dadurch gekennzeichnet, daß** das Abstützteil (9) durch einen Adapter (29) gebildet wird, der mit einem Trägerfuß (30) des Dachlastträgers (8) verbindbar ist.

9. Befestigungsvorrichtung nach Anspruch 1, **dadurch gekennzeichnet, daß** das Abstützteil (9) durch einen Trägerfuß (30) des Dachlastträgers (8) gebildet wird.

10. Befestigungsvorrichtung nach Anspruch 1, **dadurch gekennzeichnet, daß** zur lagerichtigen Positionierung der Grundplatte (13) im Dachkanal (2) an einer Längsseite der Grundplatte (13) zumindest zwei beabstandet angeordnete, seitlich vorstehende Zungen (20) ausgebildet sind, die sich an der benachbarten aufrechten Seitenwand (6) des Dachkanals (2) abstützen.

## Claims

1. A device (10) for fixing roof racks (8) to motor vehicles, in particular passenger vehicles, wherein fixing members (11) are locally arranged on the vehicle roof (1) in rain gutters (2) extending in the longitudinal direction of the vehicle in outer side regions, end supporting parts (9) of the roof racks (8) being securable to the fixing members (11), and each fixing member (11) is formed by a base plate (13) which rests against the bottom of the rain gutter and is fixed thereto and on which at least one threaded portion is formed for screwing in a fixing screw (12) for the supporting part, **characterised in that** at least one supporting surface (22), formed as an inclined plane relative to the screwing direction when viewed in the transverse direction of the vehicle, is arranged on the underside of an upright arm (21) of the supporting part (9) and rests on a parallel, upwardly extending supporting surface (23) of the base plate (13), and **in that** at least one recessed groove (27), in which a downwardly extending guide projection (28) of the supporting part (9) positively engages, is formed in the base plate (13) laterally of the supporting surfaces (23).

2. A fixing device according to claim 1, **characterised in that** the supporting surfaces (22, 23) on the supporting part (9) and the base plate (13) rise towards the centre of the vehicle.

3. A fixing device according to claim 1, **characterised in that** supporting surfaces (22, 23) are provided on the supporting part (9) and the base plate (13) on both sides of the fixing screw (12), which is approximately central when viewed in the longitudinal direction.

4. A fixing device according to claim 1, **characterised in that** the supporting surfaces (23) of the base plate (13) are slightly wider than the supporting surfaces (22) on the supporting part (9) when viewed in the transverse direction of the vehicle.

5. A fixing device according to claim 1, **characterised in that** the supporting surfaces (22) on the supporting part (9) are slightly longer than the supporting surfaces (23) on the base plate (13) so that the supporting part (9) is displaceable relative to the base plate (13) in the longitudinal direction of the vehicle.

6. A fixing device according to claim 1, **characterised in that** the groove (27) in the base plate (13) is slightly wider than the guide projection (28) extending into the groove (27) when viewed in the transverse direction of the vehicle.

7. A fixing device according to claim 1, **characterised in that** the lower edge of the guide projection (28) is spaced slightly from the underlying base of the groove (27).

8. A fixing device according to claim 1, **characterised in that** the supporting part (9) is formed by an adapter (29) which is conneotable to a supporting foot (30) of the roof rack (8).

9. A fixing device according to claim 1, **characterised in that** the supporting part (9) is formed by a supporting foot (30) of the roof rack (8).

10. A fixing device according to claim 1, **characterised in that**, for the correct positioning of the base plate (13) in the rain gutter (2), at least two spaced, laterally projecting tongues (20) are formed on a longitudinal side of the base plate (13) and are supported against the adjacent upright side wall (6) of the rain gutter (2).

## Revendications

1. Dispositif de fixation (10) pour porte-bagages de toit (8) de véhicule automobile, en particulier de voiture de tourisme, des organes de fixation étant disposés par endroits sur le toit (1) du véhicule dans des rigoles de toit (2) situées sur les côtés extérieurs et s'étendant dans la direction longitudinale du véhicule, des éléments de soutien (9) côté extrémité des porte-bagages de toit (8) pouvant être fixés sur ces organes de fixation (11), et chaque organe de fixation (11) étant formé par une plaque de base (15) reposant sur le fond de la rigole de toit, et fixée à celui-ci, plaque de base sur laquelle est réalisé au moins un tronçon fileté pour visser à l'intérieur une vis de fixation (12) destinée à l'élément de soutien, **caractérisé en ce que** sur la face inférieure d'une patte (21) verticale de l'élément de soutien (9) est disposée au moins une surface de contact (22) qui, vue dans la direction transversale du véhicule, est réalisée comme plan oblique par rapport à la direction de vissage et qui repose sur une surface de contact (23), dirigée dans le même sens et dépassant vers le haut, de la plaque de base (13), et **en ce que** sur les côtés des surfaces de contact (23) est réalisée sur la plaque de base (13) au moins une rainure (27) renfoncée dans laquelle s'engage par complémentarité de forme un ergot de guidage (28), dépassant vers le bas, de l'élément de soutien (9).

2. Dispositif de fixation selon la revendication 1, **caractérisé en ce que** les surfaces de contact (22, 23) de l'élément de soutien (9) et de la plaque de base (13) montent vers le milieu du véhicule.

3. Dispositif de fixation selon la revendication 1, **caractérisé en ce que** sur l'élément de soutien (9) et sur la plaque de base (13) sont prévues des deux côtés de la vis de fixation (12) à peu près centrale - vue dans la direction longitudinale - des surfaces de contact (22, 23).

4. Dispositif de fixation selon la revendication 1, **caractérisé en ce que** les surfaces de contact (23) de la plaque de base (13) sont légèrement plus larges - vues dans la direction transversale du véhicule - que les surfaces de contact (22) de l'élément de soutien (9).

5. Dispositif de fixation selon la revendication 1, **caractérisé en ce que** les surfaces de contact (22) de l'élément de soutien (9) sont légèrement plus longues que les surfaces de contact (23) de la plaque de base (13), de sorte que l'élément de soutien (9) peut coulisser dans la direction longitudinale du véhicule par rapport à la plaque de base (13).

6. Dispositif de fixation selon la revendication 1, **caractérisé en ce que** la rainure (27) de la plaque de base (13) est légèrement plus large - vue dans la direction transversale du véhicule - que l'ergot de guidage (28) s'engageant dans la rainure (27).

7. Dispositif de fixation selon la revendication 1, **caractérisé en ce que** le bord inférieur de l'ergot de guidage (28) s'étend à faible distance du fond situé au-dessous de la rainure (27).

8. Dispositif de fixation selon la revendication 1, **caractérisé en ce que** l'élément de soutien (9) est formé par un adaptateur (29) qui peut être relié à un pied de support (30) du porte-bagages de toit (8).

9. Dispositif de fixation selon la revendication 1, **caractérisé en ce que** l'élément de soutien (9) est formé par un pied de support (30) du porte-bagages de toit (8).

10. Dispositif de fixation selon la revendication 1, **caractérisé en ce que** pour le positionnement correct de la plaque de base (13) dans la rigole de toit (2) sont réalisées, sur un côté longitudinal de la plaque de base (13), au moins deux languettes (20) disposées espacées et dépassant latéralement, qui prennent appui contre la paroi latérale verticale (6) adjacente de la rigole de toit (2).
